Europäisches Patentamt

European Patent Office

Office européen des brevets

(19)

(11) EP 0 503 433 B1

(12) EUROPÄISCHE PATENTSCHRIFT

(45) Veröffentlichungstag und Bekanntmachung des Hinweises auf die Patenterteilung:
29.05.1996 Patentblatt 1996/22

(51) Int Cl.⁶: **G02B 6/44**

(21) Anmeldenummer: 92103575.4

(22) Anmeldetag: 02.03.1992

(54) **Verfahren und Einrichtung zum Herstellen eines optischen Kabels**

Method and device for manufacturing an optical cable

Procédé et dispositif pour la fabrication d'un câble optique

(84) Benannte Vertragsstaaten:
AT BE CH DE FR GB IT LI NL SE

(30) Priorität: 15.03.1991 DE 4108567
15.03.1991 DE 4108569

(43) Veröffentlichungstag der Anmeldung:
16.09.1992 Patentblatt 1992/38

(73) Patentinhaber: SIEMENS AKTIENGESELLSCHAFT
D-80333 München (DE)

(72) Erfinder: Pascher, Helmut, Dr.
W-8000 München 70 (DE)

(56) Entgegenhaltungen:
DE-A- 3 000 674          DE-A- 3 839 109
DE-A- 3 941 192

## Beschreibung

Die Erfindung betrifft ein Verfahren zum Herstellen eines optischen Kabels, dessen Kabelseele aus einer Vielzahl von einseitig offenen Kammerelementen zusammengesetzt wird, in die mittels einer Einlegeeinrichtung Lichtwellenleiter-Bändchen eingelegt werden, wobei die Kammerelemente helixförmig zur Kabelachse verlaufend angeordnet werden.

Ein Kabel dieser Art ist aus der DE-OS 38 39 109 bekannt. Derartige, auch als "Kammerkabel" bezeichnete Konstruktionen werden üblicherweise so mit den Lichtwellenleitern bestückt, daß der bereits fertige, im Querschnitt etwa speichenradförmige Kabelkern in Längsrichtung bewegt wird, wobei über entsprechende Einlege-Vorrichtungen die Lichtwellenleiter in die Kammeröffnungen eingebracht werden. Anschließend erfolgt das Aufbringen einer Bewicklung oder Bespinnung und in einem letzten Arbeitsgang wird der Kabelmantel aufextrudiert.

Bei Verwendung von Lichtwellenleiter-Bändchen lassen sich hohe Packungsdichten erzielen und derartige Strukturen haben auch den Vorteil, daß sie einfach und schnell gespleißt werden können. Der vorstehend beschriebene Fertigungsprozeß bedingt jedoch, daß im Gegensatz zu sogenannten "Hohladern" bei denen die Lichtwellenleiter lose im Inneren einer Schutzhülle untergebracht sind nicht mit vorgefertigten Teilelementen gearbeitet werden kann. Vielmehr werden die Lichtwellenleiter in den fertigen, die einzelnen Kammern aufweisenden Kabelkern erst an Ort und Stelle eingebracht.

Aus der DE-OS 30 00 674 ist ein optisches Kabel bekannt, dessen Kabelseele durch rundum geschlossene Kabelelemente gebildet ist. Ein derartiges Kabelelement weist nach außen abgeschlossene Nuten auf, in denen jeweils lediglich ein einzelner Lichtwellenleiter vorgesehen ist.

Der Erfindung liegt die Aufgabe zugrunde, einen Weg aufzuzeigen, wie in einfacher Weise das Einlegen der Lichtwellenleiter in die Kammern einerseits und die Fertigung der gesamten Kabelseele andererseits in getrennten Arbeitsschritten durchgeführt werden kann. Gemäß der Erfindung, welche sich auf ein Verfahren der eingangs genannten Art bezieht, wird diese Aufgabe dadurch gelöst, daß die Kammerelemente jeweils zunächst in einer gekrümmt verlaufenden Bahn geführt werden, daß im Bereich der gekrümmt verlaufenden Bahn die Lichtwellenleiter Bändchen in die Kammerelemente lagenweise derart eingelegt werden, daß die in der gekrümmten Bahn weiter außen liegenden Lichtwellenleiter-Bändchen eine größere Länge aufweisen, als die weiter innen liegenden Lichtwellenleiter-Bändchen , und daß die Kabelseele aus den so fertig bestückten Kammerelementen zusammengesetzt wird.

Würde man die Bestückung der Kammerelemente so durchführen, daß diese zunächst geradlinig gestreckt geführt werden und dann in die offenen Kammern die Lichtwellenleiter Bändchen eingelegt werden, dann hätte dies zur Folge, daß alle Lichtwellenleiter-Bändchen die gleiche Länge aufweisen. Im fertigen Kabel, wo die Kammerelemente helixförmig um die Kabelachse herum angeordnet werden, hätte dies zur Folge, daß die auf den Kammergrund liegenden Lichtwellenleiter-Bändchen gestaucht werden, während die nach außen zur Kammeröffnung hin liegenden Lichtwellenleiter-Bändchen eine Dehnung erfahren. Insbesondere bei großen Packungsdichten und relativ hohen Stapelhöhen können derartige Beanspruchungen den Lichtwellenleiter-Bändchen nicht mehr zugemutet werden. Die Erfindung schafft hier in einfacher Weise eine Abhilfe dadurch, daß die Kammerelemente zunächst jeweils in einer gekrümmt verlaufenden Bahn geführt werden, wobei das Einlegen der Lichtwellenleiter-Bändchen dort, also im Bereich der gekrümmt verlaufenden Bahn lagenweise erfolgt. Durch die gekrümmt verlaufende Bahn der Kammerelemente im Einlegebereich für die Lichtwellenleiter-Bändchen ist von vornherein sichergestellt, daß die auf den Kammergrund liegenden Bändchen insgesamt eine geringere Länge aufweisen, verglichen mit den weiter außen liegenden Bändchen. Dadurch ist bereits in der Vorfertigung, d.h. bei der Herstellung der Kammerelemente eine Struktur für die Bändchen gewährleistet, die im wesentlichen ihrer späteren Lage in der fertigen Kabelseele entspricht. Es ist damit vermieden, daß es dort zu einer unzulässig großen Stauchung der innen liegenden Bändchen oder zur unzulässig großen Dehnung der außen liegenden Bändchen jeweils innerhalb einer Kammer kommt.

Jegliche gekrümmte Bahn hat bereits diese Eigenschaft und ergibt eine Verbesserung der mechanischen Beanspruchung dann, wenn das jeweilige Kammerelement auf einer gekrümmten Bahn beim Einlegen der Lichtwellenleiter-Bändchen geführt wird.

Gemäß einer vorteilhaften Weiterbildung der Erfindung kann die Krümmung der Bahn beim Einlegeprozeß der Lichtwellenleiter-Bändchen so gewählt werden, daß sie der späteren Krümmung des helixförmig verlaufenden Kammerelementes in der fertigen Kabelseele entspricht, wodurch gewährleistet ist, daß die Bändchen überhaupt keiner mechanischen Beanspruchung und zwar weder einer Stauchung noch einer Dehnung unterworfen werden. Da es üblicherweise bekannt ist, für welche Kabelstruktur das jeweilige Kammerelement vorgesehen ist und damit auch der jeweilige Wendel-Radius der Helix festliegt, läßt sich diese Abstimmung des Einlegeprozesses einerseits und des späteren Fertigungsprozesses für die Kabelseele in einfacher Weise durchführen.

Wenn Kabel gefertigt werden, die aus mehreren übereinanderliegenden Lagen einzelner Kammerelemente zusammengesetzt sind, kann es zweckmäßig sein, für die innere Lage eine größere Krümmung bei der Einlege-Bahn vorzusehen als für die Kammerelemente die für die äußere Lage oder die äußeren Lagen vorgesehen sind. Die Fertigung kann auch so erfolgen, daß für mehrere der weiter innen liegenden Lagen die gleiche (mittlere kleinere) Krümmung gewählt wird und ebenso für mehrere weiter außen liegende Lagen von Kammerelementen die gleiche (mittlere größere) Krümmung. Abgestellt wird dabei die Krümmung jeweils auf den mittleren Durchmesser der jeweiligen (gleich aufgebauten) Lagen in der Kabelseele.

Zweckmäßig werden die Schlaglängen der einzelnen Lagen jedoch so unterschiedlich gewählt, daß sich für alle etwa der gleiche Verseilkrümmungsradius ergibt. Für die in der Kabeltechnik geläufigen Kabeldurchmesser- und Schlaglängenbereiche ist das problemlos möglich.

Die gemäß der Erfindung hergestellten Kammerelemente können in einfacher Weise zwischengelagert (z.B. aufgetrommelt) werden, wobei dieser Prozeß zweckmäßig mit etwa den gleichen Krümmungsradius durchgeführt wird wie die Krümmung beim Einlegevorgang. Dadurch ist sichergestellt, daß im Bereich der Zwischenlagerung der vorgefertigten und mit Lichtwellenleiter-Bändchen vorbestückten Kammerelemente die Lichtwellenleiter selbst ebenfalls keine unzulässigen mechanischen Beanspruchungen erfahren. Neben einem Auftrommeln ist natürlich auch eine Ablage, z.B. auf einem Teller mit einem entsprechenden Krümmungsradius möglich.

Ein Fertigungsprozeß mit vorgefertigten Kammerelementen, in welche die Lichtwellenleiter-Bändchen eingelegt werden, ist insofern wesentlich einfacher als beim bekannten Stand der Technik, weil jedes derartige Kammerelement selektiv mit den Bändchen beschickt werden kann, wobei die Kabelseele selbst aus einer gewissen Anzahl von z.B. 4, 6 oder 8 derartigen Kammerelementen in einer etwa kreisförmigen Anordnung zusammengesetzt wird.

Die Zugänglichkeit eines einzelnen Kammerelementes ist natürlich wesentlich günstiger als etwa die Zugänglichkeit für die bereits fertig mit Kammerelementen oder mit einer speicherförmigen Struktur versehene Kabelseele herkömmlicher Bauart, wo wegen des gedrängten Aufbaus die Zuführung der Lichtwellenleiter-Bändchen (es sind Führungsrohre, Leiteinrichtungen oder dergleichen erforderlich) wegen des geringen zur Verfügung stehenden Raumes zu erheblichen Schwierigkeiten führen kann. Bei der Erfindung muß der Einlegevorgang für die Lichtwellenleiter-Bändchen nicht im Bereich der fertigen Kabelseele erfolgen, sondern zeitlich und räumlich außerhalb, wobei mehr Platz zum Einlegen zur Verfügung steht.

Die Erfindung betrifft auch eine Einrichtung zur Durchführung des erfindungsgemäßen Verfahrens, wobei zum Herstellen eines optischen Kabels, dessen Kabelseele aus einer Vielzahl von einseitig offenen Kammerelementen zusammengesetzt wird, eine Einlegevorrichtung zum einlegen von Lichtwellenleiter-Bändchen in das jeweilige Kammerelement vorgesehen ist, welche dadurch gekennzeichnet ist, daß eine Einlegescheibe vorgesehen ist, über die zumindest in einem Teilbereich ihres Umfangs mindestens ein offenes Kammerelement in Umfangsrichtung in einer verkrümmt verlaufenden Bahn geführt ist, und daß dem Umfangsbereich der Einlegescheibe Vorratsspulen für die Lichtwellenleiter-Bändchen zum Einlegen in das jeweilige Kammerelement derart zugeordnet sind, daß im Umfangsbereich der Einlegscheibe die Lichtwellenleiter-Bändchen in die Kammerelemente lagenweise derart eingelegt werden, daß die in der gekrümmten Bahn weiter außen liegenden Lichtwellenleiter-Bändchen eine größere Länge aufweisen, als die weiter innen liegenden Lichtwellenleiter-Bändchen.

Die Erfindung betrifft weiterhin ein erfindungsgemäß gefertigtes optisches Kabel mit einer Vielzahl von einseitig offenen Kammerelementen, in denen jeweils ein Bandstapel aus mehreren Lichtwellenleiter-Bändchen angeordnet ist und die Kammerelemente in Richtung der Kabellängsachse gesehen helixförmig verlaufen, welches dadurch gekennzeichnet ist, daß die Lichtwellenleiter-Bändchen in die Kammerelemente derart eingelegt sind, daß die in der gekrümmten Bahn weiter außen liegenden Lichtwellenleiter-Bändchen eine größere Länge aufweisen, als die weiter innen liegenden Bändchen, und daß in den Kammerelementen jeweils mindestens zwei Zug- und/oder Stützelemente als Längselemente vorgesehen sind, die außerhalb der in der Kabelseele dem jeweiligen Kammerelement zuzuordnenden neutralen Biegeebene und außerhalb der radialen Symmetrieebene des jeweiligen Kammerelementes verlaufend angeordnet sind.

Weiterbildungen der Erfindung sind in Unteransprüchen wiedergegeben.

Die Erfindung und ihre Weiterbildungen werden nachfolgend anhand von Zeichnungen näher erläutert. Es zeigen:

Figur 1 in schematischer Darstellung eine Einrichtung zur Durchführung des erfindungsgemäßen Verfahrens, wobei das Kammerelement unmittelbar anschließend in der Kabelseele eingebracht wird,

Figur 2 den Aufbau eines gemäß der Erfindung hergestellten Kabels im Querschnitt,

Fig. 3 einen vergrößerten Teilausschnitt der Einrichtung nach Fig. 1,

Fig. 4 eine weitere Einrichtung zur Durchführung des erfindungsgemäßen Verfahrens,

Fig. 5 eine spezifische Weiterbildung eines Teilbereichs der Fig. 4,

Fig. 6 eine Verseileinrichtung mit teilweise geradlinig verlaufenden Kammerelement,

Fig. 7 eine schematische Darstellungen zur Erläuterung des Krümmungsverlaufes und

Fig. 8     einen Querschnitt durch ein optisches Kabel mit abgehobenen Bändchenstapel.

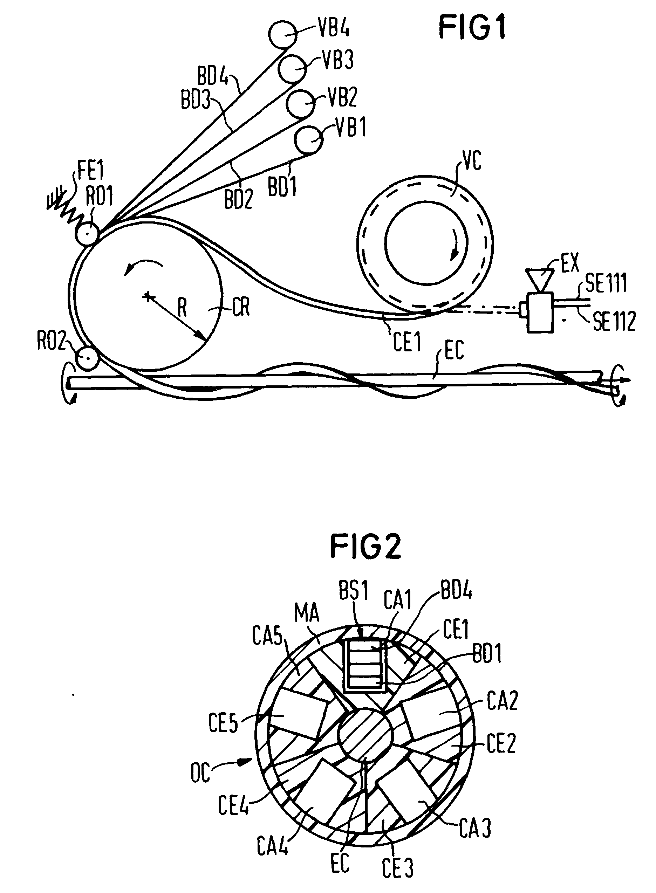

In Fig. 1 ist eine Vorratsspule VC, z.B. mit einem Wickel-Durchmesser zwischen 600 mm und 750 mm dargestellt, auf der ein Kammerelement CE1 aufgewickelt ist. Dieses Kammerelement ist in seinem Aufbau näher aus Fig. 2 ersichtlich, wo zu erkennen ist, daß die Kabelseele des optischen Kabels OC aus fünf Kammerelementen CE1-CE5 zusammengesetzt ist, die ringförmig um einen zentralen zugfesten Kern EC angeordnet sind. Die Kammerelemente sind so ausgebildet, daß sie im wesentlichen aneinanderstoßen und sich zumindest in Teilbereichen seitlich gegeneinander abstützen. Außen werden die Kammern CA1-CA5 z.B. durch eine (hier nicht dargestellten) Bespinnung oder Bewicklung verschlossen und es wird anschließend ein Kabelmantel MA aufgebracht, der gegebenenfalls mehrschichtig ausgebildet sein und auch Zugelemente enthalten kann. Jedes Kammerelement hat eine etwa U-förmige Struktur, wobei die Kammeröffnung zweckmäßig rechteckig gestaltet ist um Bändchen BD1-BD4 einzulegen, die jeweils eine feste Anzahl von z.B. 4 oder 6 Lichtwellenleiter enthalten. Insgesamt liegt also in jeder der Kammern CA1-CA5 ein Bändchenstapel vergleichbar dem Stapel BS1 bei der Kammer CA1.

Das jeweilige Kammerelement, z.B. CE1 wird also, wie bereits erwähnt, von der Vorratsspule VC abgezogen und einer Einlegescheibe CR zugeführt, die einen Radius R aufweist und mit einer bestimmten Umdrehungsgeschwindigkeit (angetrieben durch einen hier nicht dargestellten Motor) in Pfeilrichtung bewegt wird. Das Kammerelement legt sich dabei zumindest in einem Teilbereich an die Außenkontur der Einlegescheibe CR an, wobei die Führung des Kammerelementes CE1 so erfolgt, daß die Kammeröffnung in radialer Richtung gesehen nach außen läuft.

Entsprechend dem Beispiel nach Fig. 1, wo vier Lichtwellenleiter-Bändchen eingelegt werden, sind vier Vorratsspulen VB1-VB4 vorgesehen, auf denen die entsprechenden Lichtwellenleiter-Bändchen BD1-BD4 aufgetrommelt sind. Diese werden von den Vorratsspulen VB1-VB4 (zweckmäßig gebremst) abgezogen und nacheinander in der in Fig. 2 gezeigten Reihenfolge eingelegt, d.h. auf dem Grund der Kammer CA1 liegt das Bändchen BD1 und ganz außen liegt das Bändchen BD4. Infolge der Krümmung der Einlegescheibe CR erhalten die Bändchen BD1-BD4 eine unterschiedliche Länge, wobei das Bändchen BD4 länger ist (weil auf einem größeren Radius liegend) als das Bändchen BD1. Um eine definierte Lage sicherzustellen, ist eine Andruckrolle RO1 vorgesehen, die durch eine Feder FE elastisch gegen die Lichtwellenleiter-Bändchen drückt und dadurch den Bandstapel BS1 entsprechend Fig. 2 zusammenhält und auf dem Grund der Kammeröffnung CA1 des Kammerelementes CE1 positioniert.

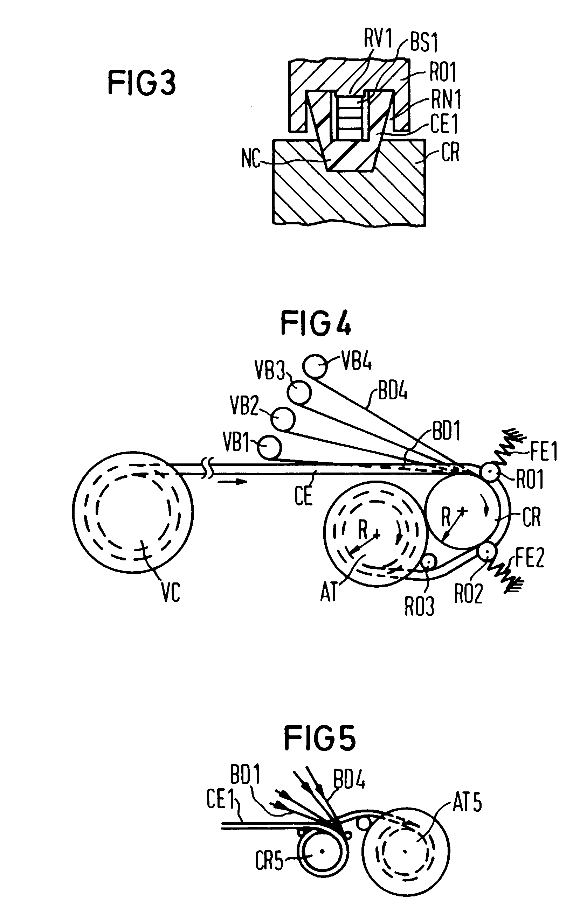

Die Andruckrolle RO1 kann zweckmäßig so ausgestaltet sein, daß sie (vergleiche Fig. 3, wo ein vergrößerter Ausschnitt dargestellt ist) in ihrem Außenbereich eine stirnseitige Nut RN1 aufweist, deren Breite so gewählt ist, daß sie eine seitliche Führung für das Kammerelement CE1 ergibt. Dieses Kammerelement ist seinerseits mit seinem unteren (schmäleren) Teil in eine Nut NC der Einlegescheibe CR eingebracht, die ebenfalls zur sicheren Führung des Kammerelementes CE1 beiträgt. Natürlich kann die Nut NC auch wesentlich tiefer gestaltet sein als in Fig. 3 angedeutet; auch kann es zweckmäßig sein, die Seitenwand der Nut dem etwa keilförmig verlaufenden Querschnitt des Kammerelementes CE anzupassen. Im Mittelbereich der Nut RN1 ist ein Vorsprung (mit größerem Radius) RV1 vorgesehen werden, der soweit in die Kammeröffnung des Kammerelementes CE1 hineinragt, daß er unmittelbar auf dem Bandstapel BS1 drückt. Die Auslegung der Rolle RO2 kann ähnlich der der Rolle RO1 nach Fig. 3 erfolgen.

Nach dem Verlassen der Legescheibe CR wird das Kammerelement auf das Kernelement EC des optischen Kabels OC aufgeseilt, das in Längsrichtung etwa tangential zur Legescheibe CR geführt ist und möglichst nahe bei dieser verläuft. Die Einlegescheibe liegt also möglichst nahe (und tangential) zur Durchlaufrichtung Verseileinrichtung. Das Kernelement EC, das aus zugfestem Material besteht, rotiert um seine Längsachse, wobei auch wechselnde Drehrichtungen möglich sind (SZ-Aufseilung). Die Geschwindigkeit der Legescheibe CR und die Durchzugs-Längsgeschwindigkeit des Zentralelementes EC müssen natürlich aufeinander abgestimmt werden, damit ein weitgehend zugspannungsfreies Aufbringen der Kammerelemente auf das Kernelement ermöglicht wird.

Die Einrichtungen zur Beschickung der übrigen Kammerelemente CE2-CE5 entsprechend Fig. 2 sind ebenso aufgebaut wie die für das Kammerelement CE1 und liegen z.B. räumlich um die Längsachse der Fertigungslinie, also die Längsachse des Kernelementes EC herum in radialer Richtung angeordnet verteilt.

Es ist auch möglich, das Kammerelemente CE1 unmittelbar herzustellen, wofür beispielsweise ein Extruder EX verwendet werden kann, wobei vom Ausgang des Extruders EX das Kammerelement auch direkt zu der Legescheibe CR geführt werden kann (entsprechende Kühleinrichtungen sind hier weggelassen).

Bei der helixförmig verlaufenden Struktur, welche das Kammerelement CE1 auf dem zugfesten Kern EC nach Fig. 1 einnimmt, ist bei den Lichtwellenleiter-Bändchen keine mechanische Beanspruchung der Fasern vorhanden. Hierzu kann die Schlaglänge, mit der das Kammerelement CE1 auf den Kern EC aufgebracht wird, unter Berücksichtigung des Durchmessers des Kernelementes EC so gewählt werden, daß durch den Aufseilvorgang keine Zugbeanspruchungen entstehen.

Für ein vorgegebenes Kabel, bei dem die Dimension des zentralen Elementes EC im wesentlichen als gegebene Größe vorliegt, kann also durch Wahl eines geeigneten Durchmessers der Legescheibe CR eine Struktur für die Lichtwellenleiter-Bändchen im Verband der fertigen Kabelseele erhalten werden, die eine mechanische Beanspruchung der Lichtwellenleiter entweder völlig vermeidet oder aber so gering hält, daß sie innerhalb vorgegebener Toleranzbereiche bleibt.

In Fig. 4 ist eine Fertigungslinie dargestellt, bei der das Kammerelement CE1 ebenfalls von einer Vorratsspule VC abgezogen wird und die Lichtwellenleiter-Bändchen BD1-BD4 von Vorratsspulen VB1-VB4 entnommen werden. Dieser Aufbau entspricht also dem der Einrichtung nach Fig. 1. Auch die Andruckrollen RO1 und RO2 haben im wesentlichen die gleiche Ausgestaltung und Funktion wie bei Fig. 1. Die Federn FE1 bzw. FE2 wirken auf diese Führungsstangen FS1 bzw. FS2.

Unterschiedlich zur Anordnung nach Fig. 1 ist im wesentlichen lediglich der Teil der Einrichtung, der dort angeordnet ist, wo das Kammerelement CE1 die Legescheibe CR verläßt. Nachfolgend ist nämlich als Speicheranordnung eine Aufwickeltrommel AT (oder ein Ablageteller) vorgesehen, deren Durchmesser R ungefähr dem Durchmesser der Legescheibe entspricht. Mit Durchmesser R bei der Aufwickeltrommel AT ist dabei der mittlere Lege-Durchmesser gemeint, wobei bei entsprechend großen Trommeldurchmesser der Unterschied zwischen der inneren und der äußersten Lage des aufgewickelten Kammerelementes CE1 keinen ins Gewicht fallenden Unterschied zeigt. Im Endergebnis liegt das Kammerelement C1 auf der als Speicheranordnung dienenden Aufwickeltrommel AT in einem für die Lichtwellenleiter-Bändchen BD1-BD4 weitgehend spannungsfreien Zustand auf.

Nach dem Verlassen der Einlegescheibe CR wird das Kammerelement CE1 zweckmäßig bis zum Auftrommeln auf der Trommel AT in einer in gleicher Richtung und vorteilhaft etwa gleichen Krümmung gebogenen Bahn (z.B. durch eine Rolle RO3) geführt, wie auf der Einlegescheibe EC.

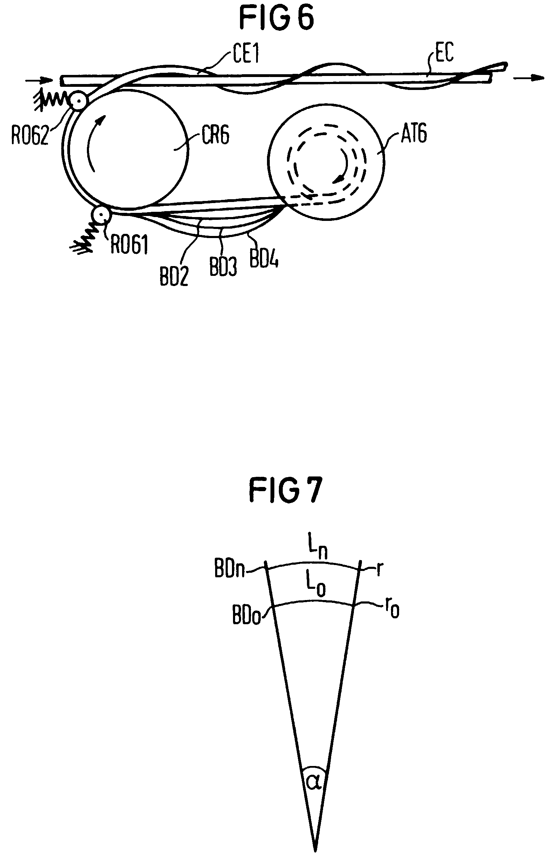

In Fig. 5 ist dargestellt, daß die Legescheibe CR5 fast vollständig von dem Kammerelement CE1 zumindest über 180° umschlungen wird, so daß sich über eine möglichst große Umschlingungsreibung (die exponentiell mit dem Umschlingungswinkel zunimmt) eine möglichst feste relative Längenkopplung der Lichtwellenleiter-Bändchen untereinander und mit dem Kammerelement CE1 ergibt.

In Fig. 6 ist dargestellt, wie von einer Ablauftrommel AT6 für den Verseilprozeß das fertig bestückte Kammerelement CE1 abgezogen werden kann. Dabei ist angenommen, daß aus irgendwelchen betrieblichen Gründen notwendig ist, das Kammerelement CE1 über eine gewisse Strecke geradlinig zu führen nämlich im vorliegenden Beispiel bis zum Auftreffen auf die Legescheibe CR6, welche dazu dient, das Kammerelement CE1 in eine Position zu bringen, in der eine Aufseilung auf das von links nach rechts durchlaufende Zentralelement EC erfolgen kann. Auch hier sind zur Stabilisierung Andruckrollen RO61 und RO62 vorgesehen, die eine ähnliche Aufgabe haben wie bei der Anordnung nach Fig. 1 nämlich die Lagesicherung der im Kammerelement CE1 angeordneten Bändchen BD1-BD4.

Wegen des geradlinigen Verlaufs in dem Teilbereich zwischen der Ablauftrommel AT6 und der Legescheibe CR6 können nicht mehr alle Bändchen des Stapels geradlinig geführt werden. Das äußerste Bändchen BD4 wird also (in der Zeichnung zur Verdeutlichung übertrieben stark dargestellt) etwas nach außen bewegt werden ebenso das nächstfolgende Bändchen BD3 und im gewissen Umfang auch das Bändchen BD2. In einem solchen Fall ist lediglich darauf zu achten, daß ein Raum zur Verfügung steht, in den sich die Bändchen hineinbewegen können, also ein entsprechender Freiraum in der Verlängerung der Öffnung des Kammerelementes CE1.

Falls erforderlich, können zur exakten Lagestabilisierung der Bändchen in geradlinig verlaufenden Teilen innerhalb der Fertigungseinrichtung auch z.B. Führungskämme, Tänzarollen oder dergleichen vorgesehen sein, wobei jedes Bändchen eine eigene, der Geometrie der jeweiligen Führung angepaßte Führungseinrichtung zuzuordnen ist.

In Fig. 7 ist zur Erläuterung der geometrischen Verhältnisse ein Teilausschnitt aus einer gekrümmten Bahn dargestellt, wobei angenommen ist, das Bändchen BDo-BDn in kreisförmigen Bahnen über einen Winkel $\alpha$ verlaufend gestapelt in radialer Richtung angeordnet sind. Ordnet man dem Bändchen BDo die neutrale Lage zu sowie die Länge Lo auf dem Kreisbogen und den Radius $r_o$, während die äußere Bahn mit dem Bändchen BDn eine Länge von Ln und den Radius r hat mit

$$r = r_o + n \cdot \Delta r$$

Dabei bezeichnet $r_o$ die Lage für den neutralen Radius. Die über einen beliebigen Winkel $\alpha$ zugeordneten Längen bleiben konstant, also auch ihr Verhältnis, so daß gilt

$$\frac{Ln}{Lo} = \frac{L'n}{L'o} \qquad (1)$$

Gleichzeitig tritt eine Änderung des Radius $r_o$ in $r_o{}'$ auf, wegen der Veränderung von L in L'. Nach der Beziehung $L = \alpha \cdot r$ bedeutet dies (bei n Lagen von Lichtwellenleiter-Bändchen, wobei jeder dieser Lagen eine Dicke von $\Delta r$ zuzuordnen ist) folgende Beziehung:

$$\frac{\alpha (r_o + n \cdot \Delta r)}{\alpha \cdot r_o} = \frac{\alpha (r_o{}' + n \cdot \Delta r')}{\alpha' \cdot r_o{}'} \qquad (2)$$

Nach Durchdividieren und Vereinfachen ergibt sich

$$\frac{\Delta r}{r_o} = \frac{\Delta r'}{r_o{}'} \text{ oder umgeformt } \Delta r' = \Delta r \cdot \frac{r_o{}'}{r_o}$$
(3)

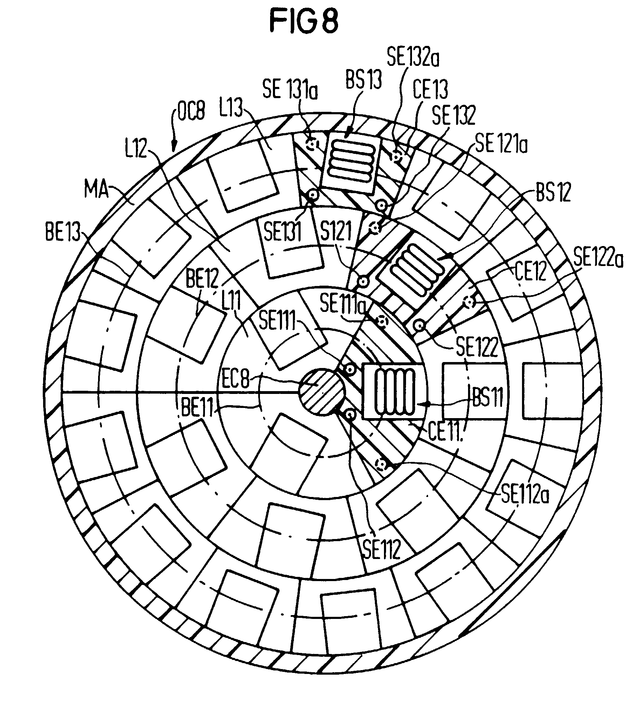

Das bedeutet, daß der Abstand jedes Lichtwellenleiter-Bändchens von der neutralen Biegelinie proportional dem momentanen Krümmungsradius der neutralen Biegelinie ist. Daraus folgt, daß bei einer Vergrößerung des Biegeradius des Bandstapels, z.B. beim Übergang von der Legescheibe oder beim Abtrommeln von der Vorratstrommel die Abstände jedes Lichtwellenleiter-Bändchens von der neutralen Biegelinie des Kammerprofils vergrößern und gleichzeitig auch die Abstände der Bändchen untereinander. Umgekehrt ergibt eine Verkleinerung des Biegeradius ein engeres Zusammenrücken der Bändchen und ein Abheben des Bändchenstapels vom Kammergrund. Ein Beispiel für die sich ergebende Bändchenstruktur zeigt die Fig. 8. Die einzelnen Bändchenstapel BS11, BS12 und BS13 sind abgehoben, liegen also nicht mehr auf dem Grund der Kammeröffnungen und gleichzeitig enger zusammengepackt, was ihre gemeinsame Verschiebbarkeit oder Längsbeweglichkeit vorteilhaft beeinflußt. Bei dem Beispiel nach Fig. 8 ist davon ausgegangen, daß das Verhältnis zwischen dem Krümmungsradius (d.h. den Radius der Wendel), welches das jeweilige Kammerelement in der Kabelseele einnimmt zu dem Radius R der Einlegescheibe CR etwa in der Größenordnung von 0,75 liegt.

In Fig. 8 ist ein optisches Kabel OC8 vorgesehen, dessen Kabelseele aus drei Lagen L11, L12 und L13 gebildet ist, die radial von innen nach außen aufeinander folgen. Im Zentrum des Kabels ist ein zugfestes Längselement EC8 vorgesehen, das beispielsweise aus Stahl oder einem sonstigen zugfesten Material, wie z.B. Glasfasern, Aramidfasern oder dergleichen besteht. In jeder Lage L11-L13 sind mehrere segmentartig ausgebildete Kammerelemente vorgesehen, wobei jeweils in jeder Lage nur eines dieser Elemente vollständig dargestellt ist, während für die übrigen nur die Umrisse angedeutet sind. Im Bereich der inneren Lage L11 sind drei Kammerelemente vorgesehen, während im Bereich der mittleren Lage L12 sieben derartige Kammerelemente CE12 und im Bereich der äußeren Lage L13 dreizehn derartige Kammerelemente CE13 vorgesehen sind. Jedes dieser Kammerelemente weist eine nach außen offene, rechteckförmig gestaltete Kammer auf, wobei der durch die offene Kammer gebildete Raum zu einem großen Teil durch einen Bändchenstapel BS11 (beim Kammerelement CE11), BS12 (beim Kammerelement CE12) und BS13 (beim Kammerelement CE13) gefüllt ist. Ein derartiger Stapel besteht aus vier Lichtwellenleiter-Bändchen, wobei ein derartiges Bändchen eine etwa angenähert rechteckförmigen Querschnitt aufweist und eine Anzahl von Lichtwellenleitern enthält.

Für jede der Lage L11-L13 ergibt sich eine strichpunktiert dargestellte neutrale Biegelinie oder Biegeebene, die im vorliegenden Beispiel mit BE11-BE13 bezeichnet sind und konzentrisch zur Längsachse des optischen Kabels OC verlaufen. Der Begriff "neutrale Biege-Ebene" gilt hier jeweils nur für das einzelne Kammerelement bei seiner Herstellung oder der Herstellung der Kabelseele nicht dagegen für das Kabel OC8 als Ganzes.

Außen ist ein gegebenenfalls mehrschichtiger Kabelmantel MA vorgesehen.

Jedem Kammerelement CE11-CE13 ist ein Paar von zug- und/oder stauchfesten Längselementen zugeordnet, die mit SE101, SE102 (beim Kammerelement CE12), SE121, SE122 (beim Kammerelement CE12) und SE131, SE132 (beim Kammerelement CE13) bezeichnet sind. Im Gegensatz zu üblichen Zug- und/oder Stützelementen (die nachfolgend der Einfachheit halber als Längselemente bezeichnet werden) sind diese nicht im Bereich der neutralen Biegeebene, also entsprechend den strichpunktierten Linien BE11-BE13 angeordnet, sondern außerhalb von dieser. Im vorliegenden Beispiel liegen alle Längselemente SE111-SE132 weiter innen als die zugehörige Biegeebene BE11-BE13. Da die Kammerelemente CE11-CE13 mit langem Schlag lagenweise auf das Zentralelement CE aufgeseilt werden, hat die Anordnung der Längselemente SE111-SE132 entsprechend Fig. 1 zur Folge, daß die Längselemente bezogen etwa auf eine Anordnung im Bereich der Biegeebenen BE11-BE13 jeweils eine geringe Länge aufweisen. Die Längselemente SE111-SE132 liegen nicht nur symmetrisch gleich weit von der jeweiligen neutralen Biegeebene BE11-BE13 entfernt, sondern sie sind auch symmetrisch zur radialen Symmetrieachse des jeweiligen Kammerelementes CE11-CE13 angeordnet.

Es ist notwendig, daß mindestens zwei derartige Längselemente in jedem Kammerelement vorgesehen sind. So könnte beispielsweise auch so verfahren werden, daß anstelle nur zweier beiderseits der radialen Symmetrielinie der Kammerelemente CE11-CE13 liegender Längselemente insgesamt vier derartige Längselemente angebracht sind, z.B. zwei rechts und zwei links von der radialen Symmetrielinie der jeweiligen Kammerelemente CE11-CE13. Die Anordnung mindestens zweier Längselemente symmetrisch zur radialen Symmetrieachse hat den Vorteil, daß eine stabilisierte Gesamt-Struktur entsteht und z.B. ein Umkippen oder dergleichen kaum auftreten kann. Da die Längselemente SE101-SE132 auf gegenüber der jeweiligen neutralen Biegeebene BE11, BE12, BE13 der "Innenspur" liegen, also gestaucht werden, müssen sie auf jeden Fall standfest, also als Stützelemente ausgebildet sein, also eine leicht stabförmige Struktur haben, d.h. z.B. als Stahldraht, GFK-Kunstharzelement oder dergleichen ausgebildet sein.

Der innere Aufbau der Kammerelemente CE21-CE23 kann gegenüber dem dargestellten Aufbau insofern abgeändert werden, als die entsprechenden Längselemente (wie gestrichelt dargestellt) SE111a-SE132a nicht innerhalb bzw. unterhalb der jeweiligen neutralen Biegeebene BE21-BE23 für die Kammerelemente angeordnet sind, sondern außerhalb bzw. oberhalb von ihr. Das bedeutet, daß die Länge der jeweiligen Längselemente gegenüber einer Anordnung von Längselementen SE111-SE132 im Bereich unterhalb der neutralen Biegeebene vergrößert werden muß. Die Längselemente SE211-SE232 müssen also auf jeden Fall zugfest sein (Zugelemente).

Bei der Herstellung wird zweckmäßig so verfahren, daß die Längselemente SE111-SE132 bzw. SE111a-SE132a bei der Fig. 1 direkt mit in den Extruderkopf eingeführt und so Kammerelemente entsprechend Fig. 8 erzeugt werden.

**Patentansprüche**

1. Verfahren zum Herstellen eines optischen Kabels (OC), dessen Kabelseele aus einer Vielzahl von einseitig offenen Kammerelementen (CE1-CE5) zusammengesetzt wird, in die mittels einer Einlegeeinrichtung Lichtwellenleiter-Bändchen (BD1-BD4) eingelegt werden, wobei die Kammerelemente (CE1-CE5) helixförmig zur Kabelachse verlaufend angeordnet werden,
**dadurch gekennzeichnet**,

daß die Kammerelemente (CE1-CE5) jeweils zunächst in einer gekrümmt verlaufenden Bahn geführt werden,
daß im Bereich der gekrümmt verlaufenden Bahn die Lichtwellenleiter-Bändchen (BD1-BD4) in die Kammerelemente (CE1-CE5) lagenweise derart eingelegt werden, daß die in der gekrümmten Bahn weiter außen liegenden Lichtwellenleiter-Bändchen (z.B. BD4) eine größere Länge aufweisen, als die weiter innen liegenden Lichtwellenleiter-Bändchen (z.B. BD1),
und daß die Kabelseele aus den so fertig bestückten Kammerelementen (CE1-CE5) zusammengesetzt wird.

2. Verfahren nach Anspruch 1,
**dadurch gekennzeichnet**,
daß die fertig bestückten Kammerelemente (CE1) als Zwischenprodukteunter Beibehaltung der unterschiedlichen Längen der Lichtwellenleiter-Bändchen (BD1-BD4) in einer Speicheranordnung (AT) abgelegt werden.

3. Verfahren nach Anspruch 2,
**dadurch gekennzeichnet**,
daß der mittlere Radius der Speicheranordnung (AT) so gewählt wird, daß eine etwa spannungsfreie Ablage der Lichtwellenleiter-Bändchen erhalten wird.

4. Verfahren nach einem der vorhergehenden Ansprüche,
**dadurch gekennzeichnet**,
daß ein Kammerelement (CE1) von einer Vorratsspule (VC) abgezogen und der Einlegeeinrichtung für die Lichtwellenleiter-Bändchen (BD1-BD4) zugeführt wird.

5. Verfahren nach einem der Ansprüche 1 bis 3,
**dadurch gekennzeichnet**,

daß ein Kammerelement (CE1) von einem Extruder (EX) kommend unmittelbar der Einlegeeinrichtung für die Lichtwellenleiter-Bändchen (BD1-BD5) zugeführt wird.

6. Verfahren nach einem der vorhergehenden Ansprüche,
**dadurch gekennzeichnet**,
daß ein Kammerelement (CE1) beim Einlegevorgang der Lichtwellenleiter-Bändchen (BD1-BD4) jeweils auf einer Kreisbahn geführt wird.

7. Verfahren nach einem der vorhergehenden Ansprüche,
**dadurch gekennzeichnet**,
daß bei Fertigung mehrlagiger Kabel die Kammerelemente (CE1-CE5) der einzelnen Lagen getrennt voneinander hergestellt werden, derart, daß Kammerelemente (CE1-CE5) für die inneren Lagen in einer stärker gekrümmt verlaufenden Bahn geführt werden als Kammerelemente (CE1-CE5) der äußeren Lagen.

8. Verfahren nach einem der vorhergehenden Ansprüche,
**dadurch gekennzeichnet**,
daß bei Fertigung mehrlagiger Kabel eine weitgehend spannungsfreie Einbringung der Kammerelemente in die Kabelseele durch Anwendung entsprechend unterschiedlicher Verseil-Schlaglänge in den verschiedenen Lagen bewirkt wird.

9. Verfahren nach Anspruch 8,
**dadurch gekennzeichnet**,
daß bei mehrlagigen Anordnungen die Schlaglängen in den einzelnen Lagen derart unterschiedlich gewählt werden, daß sich für alle Lagen etwa der gleiche Verseil-Krümmungsradius ergibt.

10. Verfahren nach einem der vorhergehenden Ansprüche,
**dadurch gekennzeichnet**,
daß das Kammerelement (CE1) beim Einlegevorgang mit seiner Öffnung nach außen weisend in der gekrummten Bahn geführt wird.

11. Verfahren nach einem der vorhergehenden Ansprüche,
**dadurch gekennzeichnet**,
daß die Kammerelemente mit außerhalb der zugehörigen neutralen Biegeebene liegenden Längselementen hergestellt werden.

12. Einrichtung zur Durchführung eines Verfahrens nach einem der vorhergehenden Ansprüche, wobei zum Herstellen eines optischen Kabels (OC), dessen Kabelseele aus einer Vielzahl von einseitig offenen Kammerelementen (CE1-CE5) zusammengesetzt wird, eine Einlegevorrichtung zum Einlegen von Lichtwellenleiter-Bändchen (BD1-BD4) in das jeweilige Kammerelement vorgesehen ist,
**dadurch gekennzeichnet,**
daß eine Einlegescheibe (CR) vorgesehen ist, über die zumindest in einem Teilbereich ihres Umfangs mindestens ein offenes Kammerelement (CE1) in Umfangsrichtung in einer gekrümmt verlaufenden Bahn geführt ist, und daß dem Umfangsbereich der Einlegescheibe (CR) Vorratsspulen (VB1-VB4) für die Lichtwellenleiter-Bändchen (BD1-BD4) zum Einlegen in das jeweilige Kammerelement derart zugeordnet sind, daß im Umfangsbereich der Einlegscheibe (CR) die Lichtwellenleiter Bändchen (BD1-BD4) in die Kammerelemente (CE1-CE5) lagenweise derart eingelegt werden, daß die in der gekrümmten Bahn weiter außen liegenden Lichtwellenleiter-Bändchen (z.B. BD4) eine größere Länge aufweisen als die weiter innen liegenden Lichtwellenleiter-Bändchen (z.B. BD1).

13. Einrichtung nach Anspruch 12,
**dadurch gekennzeichnet,**
daß für die Bändchen (BD1-BD4) mindestens eine in die Öffnung des Kammerelementes (CE1) wirkende Andrückeinrichtung (R1, R2) vorgesehen ist.

14. Einrichtung nach Anspruch 12 oder 13,
**dadurch gekennzeichnet,**
daß die Einlegescheibe (CR) drehbar gelagert ausgebildet ist.

15. Einrichtung nach einem der Ansprüche 12 bis 14,
**dadurch gekennzeichnet,**
daß vor der Einlegescheibe (CR) eine Ablauftrommel (VC) mit einem aufgetrommelten Kammerelement (CE1) vorgesehen ist.

16. Einrichtung nach einem der Ansprüche 12 bis 14,
**dadurch gekennzeichnet,**
daß vor der Einlegescheibe (EC) ein Extruder (EX) zur Herstellung des Kammerelementes (CE1) vorgesehen ist.

17. Einrichtung nach einem der Ansprüche 12 bis 16,
**dadurch gekennzeichnet,**
daß die Einlegescheibe (CR) unmittelbar neben der Verseileinrichtung, vorzugsweise tangential zu deren Durchlaufrichtung angeordnet ist.

18. Einrichtung nach einem der Ansprüche 12 bis 16,
**dadurch gekennzeichnet,**
daß nach der Einlegescheibe (CR) eine Speicheranordnung (AT) zur Aufnahme und Zwischenlagerung des mit den Lichtwellenleiter-Bändchen (BD1-BD4) versehenen Kammerelementes (CE1) vorgesehen ist.

19. Einrichtung nach einem der Ansprüche 12 bis 18,
**dadurch gekennzeichnet,**
daß an der Einlegescheibe (CR) eine Führungsnut (NC) zur Aufnahme des Kammerelementes (CE1) vorgesehen ist.

20. Einrichtung nach einem der Ansprüche 12 bis 19,
**dadurch gekennzeichnet,**
daß die Umschlingung der Einlegescheibe (CR) durch das Kammerelement (CE1) mehr als 180°, vorzugweise zwischen 270° und etwa 360° beträgt.

21. Einrichtung nach einem der Ansprüche 12 bis 20,
**dadurch gekennzeichnet,**
daß im Bereich der Einlegescheibe (CR) mindestens eine Andruckeinrichtung (RO1, RO2) für die Lichtwellenleiter-Bändchen (BD1-BD4) vorgesehen ist.

22. Einrichtung nach einem der Ansprüche 12 bis 21,
**dadurch gekennzeichnet,**
daß die Durchlaufrichtung der Verseilanordnung etwa tangential zur Einlegescheibe (CR) verläuft.

23. Optisches Kabel (OC) gefertigt nach einem der Ansprüche 1 mit 11 mit einer Vielzahl von einseitig offenen Kammerelementen (CE11-CE13), in denen jeweils ein Bandstapel (BS11-BS13) aus mehreren Lichtwellenleiter-Bändchen (z.B. BD) angeordnet ist und die Kammerelemente (CE11-CE13) in Richtung der Kabellängsachse gesehen helixförmig verlaufen,
**dadurch gekennzeichnet,**

daß die Lichtwellenleiter-Bändchen (z.B. BD1 mit BD4) in die Kammerelemente (CE1-CE5) derart eingelegt sind, daß die in der gekrümmten Bahn weiter außen liegenden Lichtwellenleiter-Bändchen (z.B. BD4) eine größere Länge aufweisen, als die weiter innen liegenden Bändchen( z.B. BD1),
und daß in den Kammerelementen (CE11-CE13) jeweils mindestens zwei Zug- und/oder Stützelemente (SE111-SE132) als Längselemente vorgesehen sind, die außerhalb der in der Kabelseele dem jeweiligen Kammerelement (CE11-CE13) zuzuordnenden neutralen Biegeebene (BE11, BE12, BE13) und außerhalb der radialen Symmetrieebene des jeweiligen Kammerelementes (CE1-CE13 verlaufend angeordnet sind.

24. Optisches Kabel nach Anspruch 23,
**dadurch gekennzeichnet,**
daß die Kammerelemente segmentförmig ausgebildet sind.

25. Optisches Kabel nach einem der Ansprüche 23 oder 24,
**dadurch gekennzeichnet**,
daß die Öffnungen der Kammerelemente nach außen weisend angeordnet sind.

26. Optisches Kabel nach einem der Ansprüche 23 bis 25,
**dadurch gekennzeichnet**,
daß durch Materialaussparungen im Bereich der Wände der Kammerelemente (CE41-CE44) sich in Längsrichtung des Kabels erstreckende Zwickelbereich (OP41, OP42) gebildet sind.

27. Optisches Kabel nach Anspruch 26,
**dadurch gekennzeichnet**,
daß in den Zwickelbereichen optische Übertragungselemente (BD41-BD44) und/oder elektrische Übertragungselemente (EL1-EL4) angeordnet sind.

28. Optisches Kabel nach einem der Ansprüche 23 bis 27,
**dadurch gekennzeichnet**,
daß die Längselemente (SE111-SE132) symmetrisch zur radial verlaufenden Symmetrielinie des jeweiligen Kammerelementes (CE11-CE13) angeordnet sind.

29. Optisches Kabel nach einem der Ansprüche 23 bis 28,
**dadurch gekenzeichnet**,
daß die Längselemente bei Anordnung in radialer Richtung gesehen außerhalb der neutralen Biegeebene (BE21-BE23) als zumindest zugfeste Elemente ausgebildet sind.

30. Optisches Kabel nach einem der Ansprüche 23 bis 29,
**dadurch gekennzeichnet**,
daß bei Anordnung der Längselemente in radialer Richtung gesehen unterhalb der neutralen Biegeebene (BE11-BE13) diese Längselemente (SE111-SE132) zumindest stützfest ausgebildet sind.

**Claims**

1. Method for manufacturing an optical cable (OC), of which the cable core is composed of a multiplicity of chamber elements (CE1-CE5) which are open on one side and into which optical waveguide ribbons (BD1-BD4) are inserted by means of an insertion device, the chamber elements (CE1-CE5) being arranged running helically in relation to the cable axis, characterized in that the chamber elements (CE1-CE5) are in each case led initially in a path running in a curve, in that in the region of the path running in a curve the optical waveguide ribbons (BD1-BD4) are inserted into the chamber elements (CE1-CE5) in a layered fashion such that the optical waveguide ribbons lying further to the outside in the curved path (e.g. BD4) have a greater length than the optical waveguide ribbons lying further to the inside (eg. BD1), and in that the cable core is composed of the chamber elements (CE1-CE5) thus ready-equipped.

2. Method according to Claim 1, characterized in that the ready-equipped chamber elements (CE1) are stored as intermediate products in a storage arrangement (AT), whilst maintaining the different lengths of the optical waveguide ribbons (BD1-BD4).

3. Method according to Claim 2, characterized in that the average radius of the storage arrangement (AT) is chosen such that an approximately tension-free deposition of the optical waveguide ribbons is obtained.

4. Method according to one of the preceding claims, characterized in that a chamber element (CE1) is drawn off from a supply spool (VC) and fed to the insertion device for the optical waveguide ribbons (BD1-BD4).

5. Method according to one of Claims 1 to 3, characterized in that a chamber element (CE1) coming from an extruder (EX) is fed directly to the insertion device for the optical waveguide ribbons (BD1-BD5).

6. Method according to one of the preceding claims, characterized in that, during the insertion process of the optical waveguide ribbons (BD1-BD4), a chamber element (CE1) is led in each case on a circular path.

7. Method according to one of the preceding claims, characterized in that, in the case of the production of multilayer cables, the chamber elements (CE1-CE5) of the individual layers are manufactured separately from one another in such a way that chamber elements (CE1-CE5) for the inner layers are led in a more sharply curved path than chamber elements (CE1-CE5) of the outer layers.

8. Method according to one of the preceding claims, characterized in that, in the case of the production of multilayer cables, a largely tension-free introduction of the chamber elements into the cable core is effected by applying correspondingly different stranding lengths of lay in the various layers.

9. Method according to Claim 8, characterized in that, in the case of multilayer arrangements, the lengths of lay in the individual layers are selected differently in such a way that approximately the same stranding radius of curvature results for all the layers.

10. Method according to one of the preceding claims, characterized in that, during the insertion process, the chamber element (CE1) is led in the curved path with its opening pointing outwards.

11. Method according to one of the preceding claims, characterized in that the chamber elements are manufactured with longitudinal elements lying outside the associated neutral bending plane.

12. Device for carrying out a method according to one of the preceding claims, in which device for manufacturing an optical cable (OC), of which the cable core is composed of a multiplicity of chamber elements (CE1-CE5) which are open on one side, an insertion device is provided to insert optical waveguide ribbons (BD1-BD4) into the respective chamber element, characterized in that an insertion disc (CR) is provided via which, at least in a partial region of its periphery, at least one open chamber element (CE1) is led in the peripheral direction in a path running in a curve, and in that supply spools (VB1-VB4) for the optical waveguide ribbons (BD1-BD4) for insertion into the respective chamber element are assigned to the peripheral region of the insertion disc (CR) in such a way that, in the peripheral region of the insertion disc (CR), the optical waveguide ribbons (BD1-BD4) are inserted into the chamber elements (CE1-CE5) in a layered fashion such that the optical waveguide ribbons lying further to the outside in the curved path (eg. BD4) have a greater length than the optical waveguide ribbons lying further to the inside (eg. BD1).

13. Device according to Claim 12, characterized in that at least one pressure device (RO1, RO2), acting into the opening of the chamber element (CE1), is provided for the ribbons (BD1-BD4).

14. Device according to Claim 12 or 13, characterized in that the insertion disc (CR) is designed to be rotatably mounted.

15. Device according to one of Claims 12 to 14, characterized in that a run-off drum (VC), with a chamber element (CE1) wound up on the drum, is provided upstream of the insertion disc (CR).

16. Device according to one of Claims 12 to 14, characterized in that an extruder (EX), for manufacturing the chamber element (CE1), is provided upstream of the insertion disc (EC).

17. Device according to one of Claims 12 to 16, characterized in that the insertion disc (CR) is arranged directly alongside the stranding device, preferably tangentially to its passage direction.

18. Device according to one of Claims 12 to 16, characterized in that a storage arrangement (AT), for the accommodation and intermediate storage of the chamber element (CE1) provided with the optical waveguide ribbons (BD1-BD4), is provided downstream of the insertion disc (CR).

19. Device according to one of Claims 12 to 18, characterized in that a guide groove (NC), for the accommodation of the chamber element (CE1), is provided on the insertion disc (CR).

20. Device according to one of Claims 12 to 19, characterized in that the amount by which the chamber element (CE1) wraps around the insertion disc (CR) is more than 180°, preferably between 270° and about 360°.

21. Device according to one of Claims 12 to 20, characterized in that at least one pressure device (RO1, RO2) for the optical waveguide ribbons (BD1-BD4) is provided in the region of the insertion disc (CR).

22. Device according to one of Claims 12 to 21, characterized in that the passage direction of the stranding arrangement runs approximately tangentially to the insertion disc (CR).

23. Optical cable (OC) produced according to one of Claims 1 to 11, having a multiplicity of chamber elements (CE11-CE13) which are open on one side, in which there is arranged in each case a ribbon stack (BS11-BS13) made of a plurality of optical waveguide ribbons (eg. BD), and the chamber elements (CE11-CE13) run helically, viewed in the direction of the cable longitudinal axis, characterized in that the optical waveguide ribbons (eg. BD1 to BD4) are inserted into the chamber elements (CE1-CE5) in such a way that the optical waveguide ribbons lying further to the outside in the curved path (eg. BD4) have a greater length than the ribbons lying further to the inside (eg. BD1), and in that in each case at least two tension and/or supporting elements (SE111-SE132) are provided in the chamber elements (CE11-CE13) as longitudinal elements which are arranged running outside the neutral bending plane (BE11, BE12, BE13) to be assigned to the respective chamber element (CE11-CE13) in the cable core, and outside the radial plane of symmetry of the respective chamber element (CE11-CE13).

24. Optical cable according to Claim 23, characterized in that the chamber elements are designed in the shape of a segment.

25. Optical cable according to one of Claims 23 or 24, characterized in that the openings of the chamber elements are arranged pointing outwards.

26. Optical cable according to one of Claims 23 to 25, characterized in that pocket regions (OP41, OP42) extending in the longitudinal direction of the cable are formed by material cut-outs in the region of the walls of the chamber elements (CE41-CE44).

27. Optical cable according to Claim 26, characterized in that optical transmission elements (BD41-BD44) and/or electrical transmission elements (EL1-EL4) are arranged in the pocket regions.

28. Optical cable according to one of Claims 23 to 27, characterized in that the longitudinal elements (SE111-SE132) are arranged symmetrically with respect to the radially running line of symmetry of the respective chamber element (CE11-CE13).

29. Optical cable according to one of Claims 23 to 28, characterized in that the longitudinal elements, if they are arranged outside the neutral bending plane (BE21-BE23), viewed in the radial direction, are designed as at least high-tensile elements.

30. Optical cable according to one of Claims 23 to 29, characterized in that, if the longitudinal elements are arranged underneath the neutral bending plane (BE11-BE13), viewed in the radial direction, these longitudinal elements (SE111-SE132) are designed to be at least capable of providing support.

**Revendications**

1. Procédé de fabrication d'un câble optique (OC), dont l'âme est composée d'une multiplicité d'éléments formant chambres (CE1 à CE5), qui sont ouverts d'un côté et dans lesquels on insère des bandelettes (BD1 à BD4) formées de guides d'ondes lumineuses au moyen d'un dispositif d'insertion, les éléments formant chambres (CE1 à CE5) étant disposés en hélice s'étendant selon l'axe du câble, caractérisé par le fait

que l'on guide les éléments formant chambres (CE1 à CE5) respectivement tout d'abord sur une trajectoire de forme courbe, dans la zone de la trajectoire de forme courbe, on insère les bandelettes (BD1 à BD4) formées de guides d'ondes lumineuses suivant des couches dans les éléments formant chambres (CE1 à CE5), de telle sorte que les bandelettes formées de guides d'ondes lumineuses (par exemple BD4), qui sont situées plus à l'extérieur dans la trajectoire cintrée, aient une plus grande longueur que les bandelettes formées de guides d'ondes lumineuses (par exemple BD1), qui sont situées plus à l'intérieur, et l'âme du câble est composée des éléments formant chambres (CE1 à CE5) ainsi finis d'équipement.

2. Procédé suivant la revendication 1, caractérisé par le fait que les éléments formant chambres (CE1) finis d'équipement sont déposés en tant que produits intermédiaires, tout en conservant les longueurs différentes des bandelettes (BD1 à BD4) formées de guides d'ondes lumineuses, dans un dispositif accumulateur (AT).

3. Procédé suivant la revendication 2, caractérisé par le fait que l'on choisit le rayon moyen du dispositif accumulateur (AT) de telle sorte qu'on obtient un dépôt, approximativement sans contrainte, des bandelettes formées de guides d'ondes lumineuses.

4. Procédé suivant l'une des revendications précédentes, caractérisé par le fait qu'on tire un élément formant chambre (CE1) d'une bobine débitrice (VC) et on l'envoie au dispositif d'insertion pour les bandelettes (BD1 à BD4) formées de guides d'ondes lumineuses.

5. Procédé suivant l'une des revendications 1 à 3, caractérisé par le fait qu'on envoie un élément formant chambre (CE1), qui arrive d'une extrudeuse (EX), directement au dispositif d'insertion pour les bandelettes (BD1 à BD5) formées de guides d'ondes lumineuses.

6. Procédé suivant l'une des revendications précédentes, caractérisé par le fait que lors de l'opération d'insertion des bandelettes (BD1 à BD4) formées de guides d'ondes lumineuses, on guide un élément formant chambre (CE1) sur une trajectoire circulaire.

7. Procédé suivant l'une des revendications précédentes, caractérisé par le fait que lors de la fabrication de câbles à couches multiples, on fabrique séparément les éléments formant chambres (CE1 à CE5) des diverses couches de sorte à guider des éléments formant chambres (CE1 à CE5) pour les couches intérieures sur une trajectoire plus fortement coudée que les éléments formant chambres (CE1 à CE5) des couches extérieures.

8. Procédé suivant l'une des revendications précédentes, caractérisé par le fait que lors de la fabrication de câbles à couches multiples, on effectue une insertion, dans une large mesure sans contrainte, des éléments formant chambres dans l'âme du câble en utilisant des pas de câblage différents correspondants, dans les couches différentes.

9. Procédé suivant la revendication 8, caractérisé par le fait que dans le cas de dispositifs à couches multiples, les pas de câblage dans les diverses couches sont choisis différents de sorte qu'on obtient pour toutes les couches approximativement le même rayon de courbure de câblage.

10. Procédé suivant l'une des revendications précédentes, caractérisé par le fait que lors de l'opération d'insertion, on guide l'élément formant chambre (CE1) tout en tournant son ouverture vers l'extérieur, sur la trajectoire courbe.

11. Procédé suivant l'une des revendications précédentes, caractérisé par le fait que l'on fabrique les éléments formant chambres en éléments longitudinaux situés à l'extérieur du plan neutre associé de courbure.

12. Dispositif pour la mise en oeuvre d'un procédé suivant l'une des revendications précédentes, dans lequel, pour fabriquer un câble optique (OC), dont l'âme est composée d'une multiplicité d'éléments formant chambres (CE1 à CE5) ouverts d'un côté, il est prévu un dispositif d'insertion destiné à insérer des bandelettes (BD1 à BD4) formées de guides d'ondes lumineuses dans chaque élément formant chambre, caractérisé par le fait qu'il est prévu un disque d'insertion (CR), au moyen duquel au moins dans une zone partielle de sa périphérie, au moins un élément formant chambre ouvert (CE) est guidé dans la direction périphérique sur une trajectoire courbe, et que des bobines débitrices (VB1 à VB4) pour les bandelettes (BD1 à BD4) formées de guides d'ondes lumineuses sont associées, pour l'insertion dans chaque élément formant chambre, dans la partie circonférentielle du disque d'insertion (CR) de telle sorte que dans la zone circonférentielle du disque d'insertion (CR), les bandelettes (BD1 à BD4) formées de guides d'ondes lumineuses soient insérées dans les éléments formant chambres (CE1 à CE5) selon des couches, de telle sorte que les bandelettes (par exemple BD4) formées de guides d'ondes, qui sont situées plus à l'extérieur sur la trajectoire courbe, aient une longueur supérieure à celle des petites bandes (par exemple BD1) formées de guides d'ondes lumineuses, qui sont situées plus à l'intérieur.

13. Dispositif suivant la revendication 12, caractérisé par le fait que pour les bandelettes (BD1 à BD4), il est prévu au moins un dispositif de serrage (R1,R2), qui agit dans l'ouverture de l'élément formant chambre (CE1).

14. Dispositif suivant la revendication 12 ou 13, caractérisé par le fait que le disque d'insertion (CR) est monté de manière à pouvoir tourner.

15. Dispositif suivant l'une des revendications 12 à 14, caractérisé par le fait qu'en amont du disque d'insertion (CR) est prévu un tambour de déroulement (VC), comportant un élément formant chambre (CE1) enroulé sur le tambour.

16. Dispositif suivant l'une des revendications 12 à 14, caractérisé par le fait qu'en amont du disque d'insertion (CR) est prévue une extrudeuse (EX) destinée à fabriquer l'élément formant chambre (CE1).

17. Dispositif suivant l'une des revendications 12 à 16, caractérisé par le fait que le disque d'insertion (CR) est disposé juste à côté du dispositif de câblage, de préférence tangentiellement par rapport à sa direction de déplacement.

18. Dispositif suivant l'une des revendications 12 à 16, caractérisé par le fait qu'en aval du disque d'insertion (CR) est prévu un dispositif accumulateur (AT) qui sert à recevoir et stocker temporairement l'élément formant chambre (CE1) équipé des bandelettes (BD1 à BD4) formées de guides d'ondes lumineuses.

19. Dispositif suivant l'une des revendications 12 à 18, caractérisé par le fait qu'une gorge de guidage (NC) servant à loger l'élément formant chambre (CE1) est prévue dans le disque d'insertion (CR).

20. Dispositif suivant l'une des revendications 12 à 19, caractérisé par le fait que l'enroulement de l'élément formant chambre (CE1) autour du disque d'insertion (CR) s'étend sur plus de 180° et est compris de préférence entre 270° et environ 360°.

21. Dispositif suivant l'une des revendications 12 à 20, caractérisé par le fait qu'au moins un dispositif de serrage (R01, R02) pour les bandelettes (BD1 à BD4) formées de guides d'ondes lumineuses est prévu dans la zone du disque d'insertion (CR).

22. Dispositif suivant l'une des revendications 12 à 21, caractérisé par le fait que la direction de déplacement du dispositif de câblage est approximativement tangentielle au disque d'insertion (CR).

23. Câble optique (OC) fabriqué suivant l'une des revendications 1 à 11, comportant une multiplicité d'éléments formant chambres (CE11 à CE13), qui sont ouverts d'un côté, dans lesquels une pile de bandes (BS11 à BS13) formées de plusieurs bandelettes (par exemple BD) constituées de guides d'ondes lumineuses est disposée, et les éléments formant chambres (CE11 à CE13) s'étendant en hélice lorsqu'on regarde dans la direction de l'axe longitudinal du câble, caractérisé par le fait que les bandelettes (par exemple BD1 à BD4) formées de guides d'ondes lumineuses sont insérées dans les éléments formant chambres (CE1 à CE5) de telle sorte que les bandelettes (par exemple BD4) formées de guides d'ondes lumineuses, qui sont disposées plus à l'extérieur sur la trajectoire cintrée, ont une longueur supérieure à celle des bandelettes (par exemple BD1) situées plus à l'intérieur, et que dans chacun des éléments formant chambres (CE11 à CE13) sont prévus au moins deux éléments de traction et/ou d'appui (SE111 à SE132) en tant qu'éléments longitudinaux, qui sont disposés à l'extérieur du plan neutre de courbure (BE11,BE12,BE13) à associer à l'élément formant chambre respectif (CE11 à CE13) dans l'âme du câble et qui s'étendent à l'extérieur du plan de symétrie radial de l'élément respectif formant chambre (CE11 à CE13).

24. Câble optique suivant la revendication 23, caractérisé par le fait que les éléments formant chambres sont sous la forme de segments.

25. Câble optique suivant l'une des revendications 23 ou 24, caractérisé par le fait que les ouvertures des éléments formant chambres sont disposées en étant tournées vers l'extérieur.

26. Câble optique suivant l'une des revendications 23 à 25, caractérisé par le fait que des zones d'interstice (OP41, OP42) qui s'étendent dans la direction longitudinale du câble sont formées par des évidements de matériau dans la zone des parois des éléments formant chambres (CE41 à CE44).

27. Câble optique suivant la revendication 26, caractérisé par le fait que dans les zones d'interstice sont disposés des éléments de transmission optique (BD41 à BD44) et/ou des éléments de transmission électrique (EL1 à EL4).

28. Câble optique suivant l'une des revendications 23 à 27, caractérisé par le fait que les éléments longitudinaux (SE111 à SE132) sont disposés symétriquement par rapport à l'axe radial de symétrie de l'élément formant chambre (CE11 à CE13).

29. Câble optique suivant l'une des revendications 23 à 28, caractérisé par le fait que les éléments direction radiale, à l'extérieur du plan neutre de courbure (BE21 à BE23), sont sous la forme d'éléments au moins résistants à la traction.

30. Câble optique suivant l'une des revendications 23 à 29, caractérisé par le fait que dans le cas de la disposition des éléments longitudinaux au-dessous du plan neutre de courbure (BE11 à BE13) lorsqu'on regarde dans la direction radiale, ces éléments longitudinaux (SE111 à SE132) sont formés de manière à fournir au moins un soutien solide.

# FIG1

# FIG2

FIG3

RV1   BS1
RO1
RN1
CE1
CR
NC

FIG4

VB4
VB3
BD4
VB2
VB1
BD1
FE1
RO1
CE
CR
R
R
FE2
VC
AT
RO3   RO2

FIG5

BD1   BD4
CE1
AT5
CR5

# FIG 6

# FIG 7

# FIG 8